# EUROPÄISCHE PATENTANMELDUNG

(11) **EP 1 385 261 A2**
(43) Veröffentlichungstag der Anmeldung: **28.01.2004**
(21) Anmeldenummer: 03016120.2
(22) Anmeldetag: 16.07.2003
(51) Int. Cl.: H02P 3/06

(54) **Gebremster Elektromotor**

(30) Priorität: 23.07.2002 DE 10234397
(71) Anmelder: C. & E. Fein Gmbh & Co. KG, 70176 Stuttgart (DE)
(72) Erfinder: Meyer, Christoph, 70599 Stuttgart (DE); Kress, Christof, 73779 Deizisau (DE); Schreiber, Alfred, 73230 Kirchheim (DE)
(74) Vertreter: Gahlert, Stefan, Dr.-Ing.

(57) **Zusammenfassung**

Es wird ein gebremster Elektromotor angegeben, der als Reihenschlussmotor oder Asynchronmotor ausgebildet sein kann. Bei der Ausführung als Reihenschlussmotor wird dieser im Motorbetrieb als herkömmlicher Elektromotor betrieben wird, wobei Mittel (S₁, S₂, S₃) zum Umschalten in den Bremsbetrieb eine Überbrückung des Ankers und eine Fremderregung mindestens einer Feldwicklung (14, 16) durch die Versorgungsspannung (17) erlauben, so dass der Motor zum Bremsen als fremderregter Gleichstromgenerator betrieben wird. Bei einer Ausführung als Asynchronmotor sind Mittel vorhanden, um die Feldwicklungen zumindest zweipolig vom Netz abzutrennen, wobei ein im Bremsbetrieb wirksames Freilaufventil vorgesehen ist und der Motor im Bremsbetrieb aus dem Netz mit Gleichspannung fremderregt betrieben wird. (Fig. 2).

## Beschreibung

Die Erfindung betrifft einen gebremsten Elektromotor mit mindestens einer Feldwicklung und einem kommutierenden Anker, der mit der mindestens einen Feldwicklung in Reihe liegt und im Motorbetrieb aus einer Versorgungsspannung gespeist wird, mit Mitteln zum Umschalten in den Bremsbetrieb.

Die Erfindung betrifft ferner einen Elektromotor in Form eines Asynchronmotors mit Kurzschlussläufer.

Ein als Reihenschlussmotor ausgebildeter gebremster Elektromotor der eingangs genannten Art ist aus der WO 91/03866 bekannt.

Hierbei wird zum Abbremsen des Reihenschlussmotors bei Umschalten vom Motorbetrieb in einen Bremsbetrieb ein geschlossener, von der Versorgungsspannung abgetrennter Stromkreis über die Feldwicklungen, Wendepolwicklungen und den Anker gebildet. Zur Begrenzung des Bremsstroms ist ein Strompfad zwischen dem Anker und einer Wendepolwicklung gebildet, der durch zwei in Wechselrichtung parallel geschaltete Zenerdioden reguliert wird.

Zur Umschaltung zwischen Motorbetrieb und Bremsbetrieb ist ein mehrpoliger Umschalter notwendig, der eine spezielle Schaltfolge aufweisen muss, um eine Zerstörung des Schalters durch die Bildung eines Lichtbogens bei schnellem Hin- und Herschalten zwischen Motorbetrieb und Bremsbetrieb zu vermeiden.

Aus der DE 36 36 555 A1 ist ein weiterer Reihenschlussmotor bekannt geworden, bei dem eine selbsterregte Bremsung beim Umschalten aus dem Motorbetrieb in den Bremsbetrieb erreicht werden soll. Um eine Einleitung der Bremsung zu gewährleisten, ist ein Kondensator vorgesehen, der im Motorbetrieb über eine Diode aufgeladen wird. Bei Umschaltung in den Bremsbetrieb wird der Bremsvorgang durch Entladung des Kondensators eingeleitet.

Auch bei diesem Elektromotor ist ein spezieller mehrpoliger Schalter notwendig, der derart ausgelegt sein muss, dass zunächst der Stromkreis zuverlässig von der Versorgungsspannung abgetrennt wird, bevor der Bremsstromkreis über eine Feldwicklung und den Anker geschlossen wird. Des weiteren wird die Verwendung eines Kondensators zur Einleitung des Bremsvorgangs als nachteilig angesehen, da nur eine einmalige Kondensatorentladung möglich ist, um den Bremsvorgang einzuleiten. Reicht dies nicht aus, um eine zuverlässige Einleitung des Bremsvorgangs zu gewährleisten, so wird bei einmal entladenem Kondensator auch danach kein Bremsen mehr ermöglicht.

Bei Asynchronmotoren mit Kurzschlussläufern sind bislang keine Bremseinrichtungen bekannt.

Vor diesem Hintergrund liegt der Erfindung die Aufgabe zugrunde, einen gebremsten Elektromotor zu schaffen, womit eine zuverlässige Bremsung auf möglichst einfache und kostengünstige Weise einerseits bei einem Reihenschlussmotor und andererseits bei einem Asynchronmotor mit Kurzschlussläufer erreicht werden kann.

Diese Aufgabe wird bei einem gebremsten Elektromotor in Form eines Reihenschlussmotors gemäß der eingangs genannten Art dadurch gelöst, dass die Mittel zum Umschalten in den Bremsbetrieb eine Überbrückung des Ankers und eine Fremderregung mindestens einer Feldwicklung durch die Versorgungsspannung im Bremsbetrieb erlauben.

Während des Motorbetriebes liegt die bekannte Schaltung eines Elektromotors vor, bei der Anker und Feldwicklung(en) in Reihe geschaltet sind. Zum Bremsen wird der Stromkreis über Anker und Feldwicklung(en) unterbrochen und mindestens eine Feldwicklung über die Versorgungsspannung fremderregt, während der Anker kurzgeschlossen wird. Der Motor wird erfindungsgemäß also zum Bremsen als fremderregter Gleichstromgenerator betrieben.

Auf diese Weise ist eine zuverlässige Einleitung der Bremsung in jedem Falle gewährleistet. Des weiteren ist ein spezieller mehrpoliger Schalter, der eine besondere Schaltfolge aufweist, nicht mehr erforderlich. Vielmehr kann die gewünschte Umschaltung zwischen Motorbetrieb und Bremsbetrieb auf rein elektronische Weise erzielt werden, sofern dies gewünscht ist.

Bezüglich des Asynchronmotors mit Kurzschlussläufer wird die Aufgabe bei einem Asynchronmotor mit mindestens zwei, vorzugsweise drei, Feldwicklungen, vorzugsweise in Sternschaltung, und mit einem Kurzschlussläufer dadurch gelöst, dass Mittel zum Umschalten in den Bremsbetrieb vorgesehen sind, die beim Umschalten in den Bremsbetrieb eine zumindest zweipolige Trennung der Feldwicklungen von der Versorgungsspannung erlauben, wobei zwischen mindestens zwei Feldwicklungen ein steuerbares Ventil vorgesehen ist, das im Bremsbetrieb als Freilaufventil wirkt und im Motorbetrieb geöffnet ist, und wobei mindestens eine, vorzugsweise zwei Feldwicklungen im Bremsbetrieb über ein Ventil von der Versorgungsspannung fremderregt werden, das im Motorbetrieb geöffnet ist.

Auf diese Weise wird die Asynchronmaschine im Bremsbetrieb über den Kurzschlussläufer gebremst.

Insgesamt lässt sich erfindungsgemäß eine zuverlässige Bremsung eines Elektromotors auf besonders kostengünstige Weise gewährleisten, wobei eine hohe Ausfallsicherheit erzielbar ist.

Grundsätzlich bestehen verschiedene Möglichkeiten, um der Ausführung des Motors als Reihenschlussmotor die erfindungsgemäße Umschaltung zwischen Motorbetrieb, bei dem Anker und Feldwicklung(en) in Reihe liegen und mit der Versorgungsspannung betrieben werden, in den Bremsbetrieb zu gewährleisten, bei dem der Motor als fremderregter Gleichstromgenerator betrieben wird.

Gemäß einer ersten Weiterbildung der Erfindung sind Mittel zur Begrenzung des Erregerstroms durch die mindestens eine Feldwicklung im Bremsbetrieb vorgesehen.

Auf diese Weise kann ein zu starker Anstieg des Erregerstroms vermieden werden.

Gemäß einer weiteren Ausgestaltung der Erfindung sind Mittel zur Begrenzung der Spannung an der mindestens einen Feldwicklung im Bremsbetrieb vorgesehen. Es kann sich hierbei um ein sogenanntes Freilaufventil handeln.

Auf diese Weise werden Überspannungen vermieden, die insbesondere bei Verwendung von schnell schaltenden elektronischen Bauelementen insbesondere in Verbindung mit Induktivitäten auftreten können.

In vorteilhafter Weiterbildung der Erfindung ist beim Reihenschlussmotor zur Überbrückung des Ankers im Bremsbetrieb ein steuerbares Ventil vorgesehen, das parallel zum Anker geschaltet ist.

Auch zur Beeinflussung des Erregerstroms durch die mindestens eine Feldwicklung kann ein steuerbares Ventil vorgesehen sein.

Als steuerbares Ventil soll im Sinne dieser Anmeldung ganz allgemein ein Schalter, ein Relais, insbesondere aber ein Halbleiter mit geeigneter Ansteuerung, wie ein Triac, ein Thyristor, ein Transistor, insbesondere Feldeffekttransistor oder dergleichen mehr verstanden werden.

Hierbei kann zur Ansteuerung eines steuerbaren Ventils insbesondere ein. Optokoppler, wie z.B. eine Optodiode mit einem Opto-triac vorgesehen sein. Hierdurch wird eine Entkopplung zwischen einem Steuerstromkreis und dem zu schaltenden Stromkreis gewährleistet, in dem das steuerbare Ventil liegt.

Es versteht sich, dass natürlich beliebige andere Ausführungen für ein steuerbares Ventil möglich sind, z.B. die Verwendung eines Relais. Um für bestimmte Anwendungen oder Schaltungen eine Stromrichtung vorzugeben, kann im einfachsten Fall eine Diode (Ventil) verwendet werden.

Gemäß einer weiteren Ausgestaltung der Erfindung verbindet das steuerbare Ventil die mindestens eine Feldwicklung im Bremsbetrieb über einen Lastwiderstand mit der Speisespannung.

Bei dieser sehr einfachen Ausführung wird also eine Begrenzung der Fremderregung über die mindestens eine Feldwicklung einfach durch einen Leistungswiderstand erreicht.

Gemäß einer Weiterbildung dieser Ausgestaltung verbindet das steuerbare Ventil die mindestens eine Feldwicklung über einen Lastwiderstand und mindestens eine Erregerwicklung mit der Speisespannung.

Da sich die Erregung aus dem Produkt aus Windungszahl und Strom ergibt, kann sich bei einer entsprechenden Windungszahl eine größere Erregung trotz deutlich kleinerem Strom ergeben. Deshalb kann für den Lastwiderstand ein höherer Widerstandswert gewählt werden, wodurch die daran anfallende Verlustleistung geringer ausfällt.

Gemäß einer weiteren Ausgestaltung der Erfindung ist zur Überbrückung des Ankers ein steuerbares Ventil vorgesehen, das in Reihe mit einer Erregerwicklung parallel zum Anker angeschlossen ist.

Gleichfalls wie bei der zusätzlichen Erregerwicklung im Erregerstromkreis über die mindestens eine Feldwicklung kann auch hierbei ein Lastwiderstand mit geringerer Verlustleistung verwendet werden. Da der Strom im kurzgeschlossenen Ankerstromkreis deutlich höher ist, reicht hierbei jedoch eine Erregerwicklung mit geringerer Windungszahl aus als bei der zuvor beschriebenen Variante.

Zur Steuerung des Motors im Motorbetrieb kann gemäß einer weiteren Ausgestaltung der Erfindung eine Phasenanschnittsteuerung vorgesehen sein, über die ein Schalter, vorzugsweise in Form eines Triacs gesteuert wird, der in Reihe mit der mindestens einen Feldwicklung und dem Anker liegt.

Gemäß einer weiteren Variante der Erfindung ist zur Steuerung des Motors im Motorbetrieb ein Transistor, vorzugsweise ein Feldeffekttransistor, vorgesehen, der vorzugsweise von einer Pulsweitenmodulationssteuerung (PWM) angesteuert wird, und der mit der mindestens einen Feldwicklung und dem Anker in Reihe liegt.

Eine derartige Schaltung kann ohne weiteres verwendet werden, sofern die Versorgungsspannung eine Gleichspannung ist.

Im Falle der Verwendung von Wechselstrom als Speisespannung wird der Transistor im Motorstromkreis vorzugsweise über einen Gleichrichter, insbesondere einen Brückengleichrichter, an die Speisespannung bzw. an die mindestens eine Feldwicklung bzw. die Ankerwicklung angeschlossen.

Gemäß einer weiteren Ausgestaltung der Erfindung ist ein Ventil vorgesehen, das parallel zu der mindestens einen Feldwicklung angeschlossen ist, die zur fremderregten Bremsung im Bremsbetrieb verwendet wird.

Auf diese Weise werden Überspannungen vermieden, die insbesondere durch die Verwendung von schnellen elektronischen Schaltelementen, wie z.B. bei der PWM-Ansteuerung, entstehen können.

Gemäß einer weiteren Ausgestaltung der Erfindung wird zur Steuerung des Erregerstroms im Bremsbetrieb durch die mindestens eine Feldwicklung ein Transistor, vorzugsweise ein Feldeffekttransistor, verwendet, der vorzugsweise über eine Pulsweitenmodulationssteuerung angesteuert wird.

Auf diese Weise kann auf die Verwendung von Lastwiderständen oder zusätzlichen Erregerwicklungen zur Begrenzung des Erregerstroms verzichtet werden.

Falls gewünscht, kann ein über eine Pulsweitenmodulationssteuerung angesteuerter Transistor sowohl zur Steuerung des Motorstroms im Motorbetrieb als auch zur Steuerung des Bremsstroms im Bremsbetrieb verwendet werden, wodurch sich die Schaltung insgesamt vereinfacht.

Sofern zur Steuerung des Motors im Motorbetrieb eine Phasenanschnittsteuerung verwendet werden soll und zur Steuerung des Motors im Bremsbetrieb, d.h. zur Begrenzung des Erregerstroms, ein Transistor verwendet werden soll, so wird dieser vorzugsweise über ein Ventil an den Anker bzw. die mindestens eine Feldwicklung angeschlossen.

Sofern die verwendete PWM-Steuerung abschaltbar ist, reicht hierbei als Ventil eine Diode aus. Anderenfalls wird vorzugsweise ein abschaltbares Ventil verwendet.

Zur Ansteuerung eines steuerbaren Ventils wird vorzugsweise ein Optokoppler mit einem Optotriac verwendet.

Hierdurch ergibt sich eine besonders einfache und zuverlässige Entkopplung zwischen einer Steuerspannung und einer zu schaltenden Spannung in dem Stromkreis, in dem das Ventil liegt.

Gemäß einer weiteren Ausführung der Erfindung wird zur Steuerung des Motors sowohl im Motorbetrieb als auch im Bremsbetrieb eine Phasenanschnittsteuerung verwendet, über die ein Schalter vorzugsweise in Form eines Triacs gesteuert wird, der in Reihe mit der mindestens einen Feldwicklung und dem Anker liegt. Dabei steuert die Phasenanschnittsteuerung im Bremsbetrieb nur eine Halbwelle entsprechend der zur Bremsen notwendigen Stromrichtung an.

Hierdurch sind weniger Bauteile notwendig. Auch ergibt sich ein volumensparender Aufbau bei geringen Verlusten.

Ist der erf indungsgemäße Elektromotor als Asynchronmotor mit Kurzschlussläufer ausgeführt, so können die steuerbaren Ventile beispielsweise als Triacs ausgeführt sein, die jeweils mit einer Diode in Reihe liegen.

Hierbei wird vorzugsweise das als Freilaufventil wirkende Ventil im Bremsbetrieb mit einem Stromflusswinkel von 180° betrieben wird, während der Stromflusswinkel des Ventils zur Fremderregung im Bremsbetrieb auf einen Wert von ≤180° steuerbar ist.

Auf diese Weise ergibt sich eine einfache Regelungsmöglichkeit für die Intensität der Bremsung.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine erste Ausführung eines erfindungsgemäßen Elektromotors in Form eines Reihenschlussmotors im Motorbetrieb in stark vereinfachter Prinzipdarstellung;
- Fig. 2: den Elektromotor gemäß Fig. 1 im Bremsbetrieb;
- Fig. 3: eine weitere Ausführung eines erfindungsgemäßen Reihenschlussmotors in stark vereinfachter Prinzipdarstellung;
- Fig. 4: eine weitere Ausgestaltung eines erfindungsgemäßen Reihenschlussmotors unter Verwendung eines Lastwiderstandes zur Begrenzung des Erregerstroms;
- Fig. 5: eine Abwandlung der Ausführung gemäß Fig. 4, wobei zusätzlich eine Hilfserregerwicklung vorgesehen ist, die im Bremsbetrieb über den im Ankerstromkreis fließenden Strom erregt wird;
- Fig. 6: eine weitere Abwandlung der Ausführung gemäß Fig. 4, bei der zusätzlich in Reihe mit dem Lastwiderstand eine Hilfserregerwicklung vorgesehen ist;
- Fig. 7: eine weitere Ausgestaltung eines erfindungsgemäßen Reihenschlussmotors, bei dem im Falle eines Betriebs mit Gleichstrom ein Ventil in Form eines Feldeffekttransistors sowohl zur Steuerung des Motorstroms im Motorbetrieb als auch zur Steuerung des Bremsstroms im Bremsbetrieb vorgesehen ist;
- Fig. 8: eine Abwandlung der Ausführung gemäß Fig. 7 für einen Betrieb mit Wechselstrom;
- Fig. 9: eine weitere Abwandlung eines erfindungsgemäßen Reihenschlussmotors mit Phasenanschnittsteuerung für den Motorbetrieb und Pulsweitenmodulationssteuerung für den Bremsbetrieb im Falle einer symmetrischen Anordnung des Ankers zwischen zwei Feldwicklungen;
- Fig. 10: eine Abwandlung der Ausführung gemäß Fig. 9 mit asymmetrischer Anordnung der Feldwicklungen;
- Fig. 11: eine praktische Ausführung der Schaltung gemäß Fig. 9, wobei die beiden Ventile V₂, V₃ über Triacs realisiert sind, die über Optotriacs angesteuert werden;
- Fig. 12: eine Abwandlung der Ausführung gemäß Fig. 8, bei der statt einer Pulsweitenmodulationssteuerung eine Phasenanschnittsteuerung sowohl für den Motorbetrieb als auch für den Bremsbetrieb verwendet wird;
- Fig. 13: eine Abwandlung der Ausführung gemäß Fig. 10 mit zwei Dioden und nur einem steuerbaren Ventil zur Bremssteuerung in asymmetrischer Anordnung;
- Fig. 14: eine Abwandlung der Ausführung gemäß Fig. 13 in symmetrischer Anordnung und
- Fig. 15: eine Ausführung eines erfindungsgemäßen Asynchronmotors mit drei Phasen und einer Bremsschaltung mit steuerbaren Ventilen.

Ein erfindungsgemäßer Elektromotor lässt sich beispielsweise vorteilhaft zum Betrieb eines gebremsten Elektrowerkzeuges verwenden, wie etwa zum Betrieb eines gebremsten Winkelschleifers, einer Säge oder dergleichen mehr.

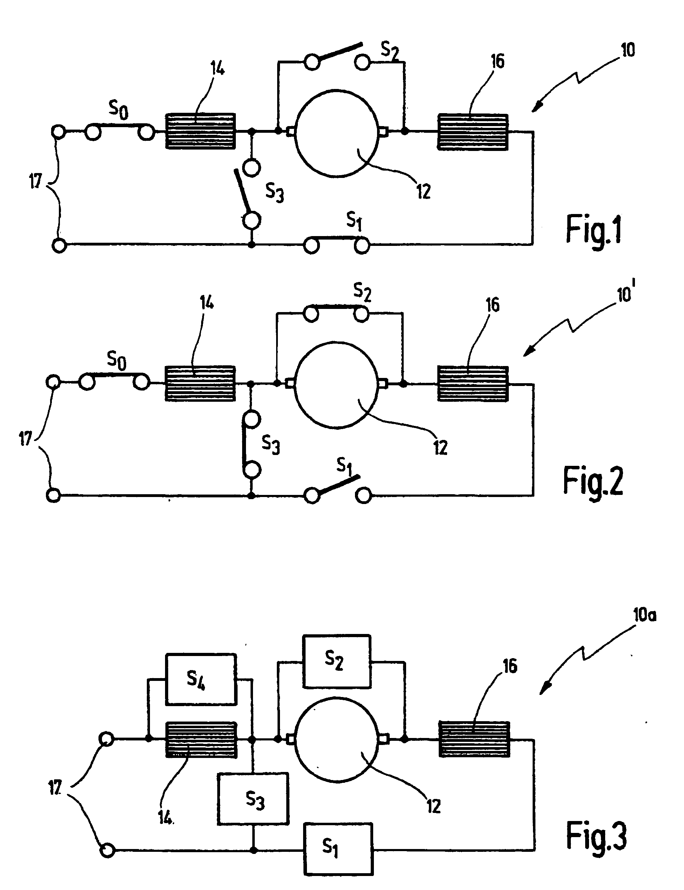

Zunächst soll das Grundprinzip der Erfindung anhand eines erfindungsgemäßen Reihenschlussmotors erläutert werden, der in den Figuren 1, 2 und 3 vereinfacht dargestellt ist.

Während Fig. 1 einen erfindungsgemäßen Reihenschlussmotor 10 im Motorbetrieb zeigt, zeigt Fig. 2 den Reihenschlussmotor 10' im Bremsbetrieb.

Der Reihenschlussmotor 10 bzw. 10' umfasst zwei Feldwicklungen 14, 16 und einen Anker 12, der in der üblichen Weise eine kommutierende Ankerspule aufweist, die über Bürsten angeschlossen ist, die in den Figuren 1 und 2 lediglich schematisch angedeutet sind.

Der Anker 12 ist zwischen den beiden Feldwicklungen 14, 16 in Reihe geschaltet und über einen Schalter S₁ (Motorschalter) mit einer Speisespannungsquelle 17 verbindbar. Zusätzlich kann ein Netzschalter S₀ zum Ein- und Ausschalten des gesamten Motors vorgesehen sein, über den die Verbindung mit der Speisespannung 17 erfolgt. Soweit handelt es sich um die bekannte Schaltung eines Reihenschlussmotors mit symmetrischer Anordnung des Ankers 12 zwischen zwei Feldwicklungen 14, 16.

Erfindungsgemäß besteht nun die Möglichkeit, den Reihenschlussmotor 10 zur Bremsung derart umzuschalten, dass sich die Schaltung eines fremderregten Gleichstromgenerators ergibt, wie in Fig. 2 dargestellt ist.

Hierzu wird zunächst durch Öffnen des Schalters S₁ der Stromkreis über die beiden Feldwicklungen 14, 16 und den Anker 12 getrennt. Ferner wird der Anker 12 über einen dazu parallelen Schalter S₂ kurzgeschlossen, während die Feldwicklung 14 über einen Schalter S₃ mit dem anderen Pol der Speisespannung verbunden wird, so dass sich eine Fremderregung ergibt. Es versteht sich, dass die Schalter S₂, S₃ während des Motorbetriebs geöffnet sind, wie aus der Darstellung gemäß Fig. 1 zu ersehen ist.

Da der erfindungsgemäße Reihenschlussmotor im Bremsbetrieb als fremderregter Gleichstromgenerator betrieben wird, werden Probleme, die im Stand der Technik mit dem selbsterregten Bremsen verbunden sind, vollständig vermieden.

Eine verallgemeinerte Ausführung des Reihenschlussmotors 10 bzw. 10' gemäß der Figuren 1 und 2 ist in Fig. 3 dargestellt und insgesamt mit der Ziffer 10a bezeichnet.

Wiederum umfasst hierbei der Reihenschlussmotor 10a einen Anker 12 und zwei Feldwicklungen 14, 16, die miteinander in Reihe liegen. Während in Fig. 3 eine symmetrische Anordnung des Ankers 12 dargestellt ist, wobei also der Anker 12 zwischen den beiden Feldwicklungen 14, 16 angeordnet ist, ist grundsätzlich auch eine asymmetrische Anordnung denkbar, wobei die beiden Feldwicklungen 14, 16 unmittelbar miteinander verbunden sind und an einem Ende über den Anker 12 mit der Versorgungsspannung gekoppelt sind.

Die in Fig. 1 und 2 erwähnten Schalter S₁, S₂, S₃ sind in Fig. 3 verallgemeinert dargestellt als beliebige Baugruppen, die es erlauben, einen Strom zu steuern. Hierbei kann es sich um eine vollständige Unterbrechung, wie etwa durch einen mechanischen Schalter oder ein Relais handeln, oder aber um ein vollständiges Durchsteuern bzw. um beliebige Zwischenwerte. Dabei kann eventuell eine Strombegrenzung durch einen Widerstand oder eine Induktivität erzielt werden. Durch einen Halbleiter mit entsprechender Ansteuerung, z.B. einen Triac, einen Thyristor, einen Transistor, insbesondere einen Feldeffekttransistor u.s.w. lässt sich eine solche Baugruppe vollständig mit elektronischen Mitteln realisieren.

Zusätzlich zu der Ausführung gemäß der Figuren 1 und 2 weist der Reihenschlussmotor 10a gemäß Fig. 3 eine weitere Baugruppe S₄ auf, die parallel zur einen Feldwicklung 14 angeschlossen ist und die dazu dient, die je nach Ausführung der Baugruppe S₃ die an der Feldwicklung 14 anfallende Spannung zu begrenzen. Falls beispielsweise die Baugruppe S₃ schnelle elektronische Schalter beinhaltet, wie etwa bei einer Pulsweitenmodulationssteuerung, so könnten hierdurch schädliche Spannungsspitzen entstehen, die durch die Baugruppe S₄ begrenzt werden können. Mit S₄ wird daher ganz allgemein ein Freilaufventil zur Begrenzung von Spannungsspitzen bezeichnet, wobei es sich im einfachsten Fall um eine Diode handeln könnte.

Nach Abschluss der Bremsung kann S₃ geöffnet werden, um die Schaltung vollständig von der Speisespannung zu trennen. Dies gilt für alle Varianten der Erfindung.

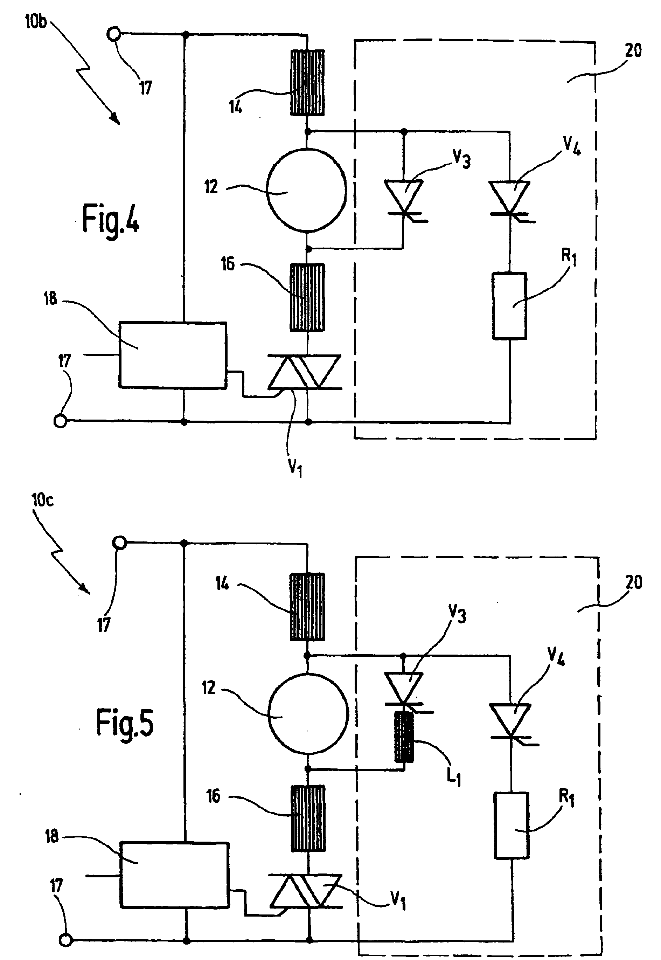

Ein erfindungsgemäßer Reihenschlussmotor lässt sich unter Verwendung von wenigen elektronischen Bauteilen besonders einfach, kostengünstig und zuverlässig aufbauen, wie im folgenden anhand von Beispielen gemäß der Figuren 4 bis 15 näher erläutert wird.

Dabei kann der Aufbau so getroffen werden, dass die Bremselektronik von der Motorelektronik derart getrennt ist, dass in der Regel eine Nachrüstung eines Motors mit einer Bremsschaltung möglich ist. Es ist praktisch nur eine Signalleitung zwischen Motorelektronik und Bremselektronik notwendig, um den Bremsvorgang zu aktivieren. Bei den folgenden Schaltungen ist zur Verdeutlichung die Bremselektronik als Bremsmodul 20 mit einer gestrichelten Linie gesondert hervorgehoben.

Dabei werden im übrigen für entsprechende Teile entsprechende Bezugsziffern bei den verschiedenen Ausführungsvarianten verwendet.

In Fig. 4 ist eine erste dieser Ausführungsvarianten insgesamt mit der Ziffer 10b bezeichnet.

Der Motor 10b umfasst einen Anker 12, der symmetrisch zwischen zwei Feldwicklungen 14, 16 in Reihe geschaltet ist. Während die eine Feldwicklung 14 mit ihrem vom Anker 12 abgewandten Ende unmittelbar an einen Pol der Speisespannung 17 angeschlossen ist, ist die andere Feldwicklung 16 an ihrem vom Anker 12 abgewandten Ende über ein Ventil V₁, das als Triac ausgeführt ist, mit dem zweiten Pol der Speisespannung 17 verbunden. Das Ventil V₁ wird über eine Phasenanschnittsteuerung 18 in an sich bekannter Weise angesteuert. Bis hierhin entspricht die Schaltung des Reihenschlussmotors mit Feldwicklungen 14, 16, Anker und Triac V₁ mit Phasenanschnittsteuerung 18 im Motorbetrieb dem Stand der Technik.

Erfindungsgemäß ist nun ein insgesamt mit der Ziffer 20 bezeichnetes Bremsmodul vorgesehen, das zwei Ventile V₃, V₄ und einen Lastwiderstand R₁ umfasst. Parallel zum Anker 12 ist das Ventil V₃ angeschlossen, bei dem es sich im dargestellten Fall um einen Thyristor handelt, der beispielsweise über einen Optokoppler angesteuert sein kann (nicht dargestellt). Das Ventil V₃ ermöglicht eine Überbrückung der Ankerwicklung 12 in der anhand der Figuren 2 und 3 erläuterten Weise. Zwischen dem Anker 12 und der Feldwicklung 14 ist ferner das Ventil V₄ angeschlossen, über das die Feldwicklung 14 vom einen Pol der Speisespannung 17 über einen Lastwiderstand R₁ mit dem anderen Pol der Speisespannungsquelle 17 verbunden ist. Hierüber fließt der Erregerstrom im Bremsbetrieb.

Auch bei diesem Ventil V₄ kann es sich beispielsweise um einen Thyristor handeln, der z.B. über einen Optokoppler angesteuert wird (nicht dargestellt).

Bei der Umschaltung in den Bremsbetrieb wird zunächst das Ventil V₁ geöffnet und die Ventile V₃, V₄ eingeschaltet. Somit wird der Anker 12 und das Ventil V₃ kurzgeschlossen und die Feldwicklung 14 über das Ventil V₄ und den Lastwiderstand R₁ aus der Speisespannungsquelle 17 fremderregt. Da beide Ventile V₃, V₄ gleichermaßen mit ihren Anoden zwischen Anker 12 und Feldwicklung 14 angeschlossen sind, ist bei Umschaltung in den Bremsbetrieb die Stromrichtungsumkehr im Anker automatisch vorgegeben.

Während es sich bei den Ventilen V₁ und V₃ im einfachsten Fall auch um einen Ein-/Ausschalter handeln könnte, handelt es sich bei dem Ventil V₄ um ein Schaltelement mit Vorzugsrichtung, also zumindest um einen mechanischen Schalter oder ein Relais, in Reihe mit einer Diode. Vorzugsweise ist das Ventil V₄ jedoch als elektronisches Bauelemente mit Vorzugsrichtung ausgebildet, das schaltbar ist, wie z.B. als Thyristor. Der Lastwiderstand R₁ dient zur Begrenzung des Erregerstroms und kann beispielsweise als Leistungswiderstand mit ca. 150 Watt ausgelegt sein, sofern der Reihenschlussmotor 10b etwa als gebremster Universalmotor mit einer Leistung von ca. 1000 Watt ausgelegt ist.

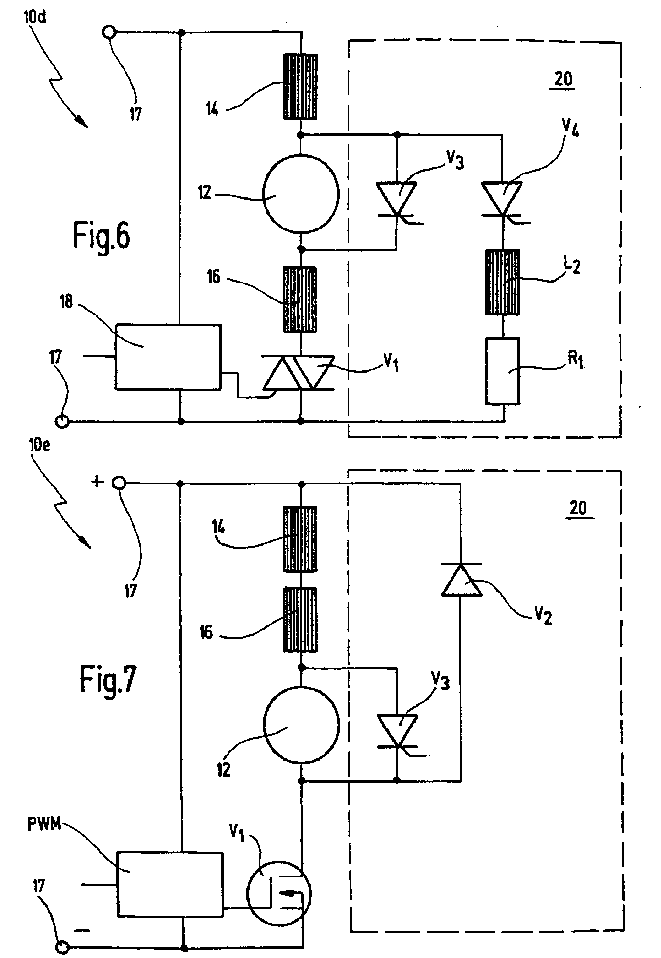

Eine Abwandlung des Reihenschlussmotors gemäß Fig. 4 ist in Fig. 5 dargestellt und insgesamt mit der Ziffer 10c bezeichnet.

Der einzige Unterschied zum Reihenschlussmotor 10b besteht darin, dass bei der Ausführung gemäß Fig. 5 eine zusätzliche Erregerwicklung L₁ in Reihe mit dem Ventil V₃ liegt. Durch diese zusätzliche Erregerwicklung, die im Bremsbetrieb vom Ankerstrom durchflossen wird, wird die Bremswirkung verstärkt. Aus diesem Grund kann der über die Feldwicklung 14, das Ventil V₄ und den Lastwiderstand R₁ fließende Erregerstrom im Bremsbetrieb reduziert werden, der Lastwiderstand R₁ also mit einem größeren Widerstandswert ausgestaltet werden, so dass die daran anfallende Verlustleistung reduziert wird.

Eine weitere Abwandlung dieser Ausführung ist in Fig. 6 dargestellt und insgesamt mit der Ziffer 10d bezeichnet. Der einzige Unterschied zur Ausführung gemäß Fig. 5 besteht darin, dass anstelle einer zusätzlichen Erregerwicklung L₁ nunmehr eine zusätzliche Erregerwicklung L₂ vorgesehen ist, die in Reihe mit dem Ventil V₄ und dem Lastwiderstand R₁ liegt.

Auch auf diese Weise wird eine stärkere Erregung im Bremsbetrieb gewährleistet, wozu ein kleinerer Erregerstrom ausreicht.

Eine weitere Ausgestaltung eines erfindungsgemäßen Reihenschlussmotors ist in Fig. 7 dargestellt und insgesamt mit der Ziffer 10e bezeichnet. Die betreffende Schaltung ist zum Betrieb mit Gleichstrom ausgelegt, wodurch sich eine vereinfachte Ausführung ergibt. Im Unterschied zu den zuvor beschriebenen Ausführungen sind hierbei die beiden Feldspulen 14, 16 asymmetrisch zum Anker 12 angeordnet, was grundsätzlich auch bei den zuvor beschriebenen Ausführungen und anderen nachfolgend beschriebenen Ausführungen immer möglich ist.

Zur Steuerung sowohl des Motorstroms als auch des Bremsstroms ist ein Ventil V₁ vorgesehen, das als Feldeffekttransistor ausgeführt ist, der mit Source und Drain an den Minuspol der Speisespannung 17 bzw. an den Anker 12 angeschlossen ist. Der Feldeffekttransistor wird über eine Pulsweitenmodulationssteuerung PWM an seinem Gate angesteuert.

Wiederum ist parallel zum Anker 12 ein steuerbares Ventil V₃ angeschlossen, das beispielsweise als Thyristor ausgeführt sein kann, der mit seiner Kathode mit Drain des Feldeffekttransistors V₁ verbunden ist. Um Überspannungen zu verhindern, die durch das schnelle Schalten des Ventils V₁ durch die Pulsweitenmodulationssteuerung entstehen können, ist zwischen Drain des Ventils V₁ und dem Pluspol der Speisespannung 17 ein Ventil V₂ angeschlossen, das als Freilaufventil dient. Im dargestellten Fall ist das Ventil V₂ einfach als Diode ausgeführt, die mit ihrer Kathode mit dem Pluspol verbunden ist und mit ihrer Anode mit der Kathode des Ventils V₃ bzw. dem Anker 12 bzw. Drain des Ventils V₁ verbunden ist.

Das Ventil in Form der Diode V₂ vermeidet den Aufbau von Überspannungen, die über der aus dem Anker 12 und den beiden Feldwicklungen 14, 16 gebildeten Strecke auftreten könnten. Im Motorbetrieb ist das Ventil V₃ ausgeschaltet, und die Leistung wird durch das Ventil V₁ gesteuert. Bei Umschaltung in den Bremsbetrieb wird zunächst das Ventil V₁ ausgeschaltet und dann zeitverzögert das Ventil V₃ eingeschaltet. Anschließend wird das Ventil V₁ für die Dauer der Bremsphase von z.B. 3 Sekunden eingeschaltet, bis der Motor steht. Danach werden V₁ und V₃ ausgeschaltet. Damit ist die Bremsphase beendet.

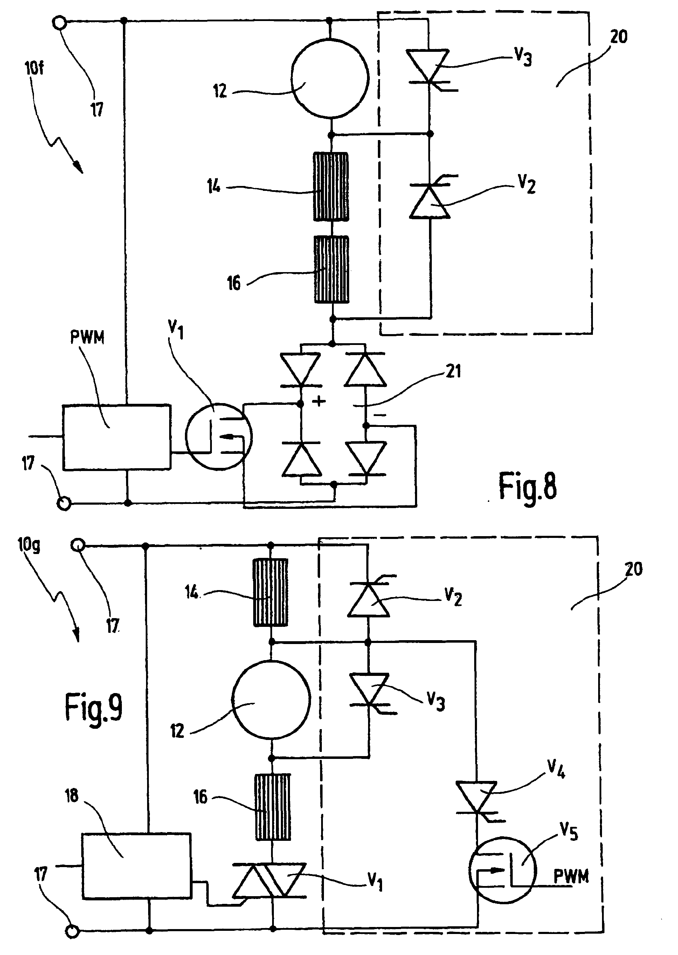

In Fig. 8 ist eine Abwandlung der Schaltung gemäß Fig. 7 für den Betrieb mit Wechselstrom dargestellt und insgesamt mit der Ziffer 10f bezeichnet. Der Anker 12 ist asymmetrisch zu den beiden Feldwicklungen 14, 16 angeordnet und liegt mit einem Pol an der Speisespannung 17. Die beiden mit dem Anker 12 in Reihe geschalteten Feldwicklungen 14, 16 sind an ihrem anderen Ende an einen Brückengleichrichter 21 angeschlossen, dessen anderer Wechselstromeingang mit dem anderen Pol der Speisespannungsquelle 17 verbunden ist. Das Ventil V₁ wiederum in Form eines Feldeffekttransistors wird an seinem Gate über die Pulsweitenmodulationssteuerung PWM angesteuert und ist mit Drain am Pluspol und mit Source am Minuspol des Brückengleichrichters 21 angeschlossen.

Zur Überbrückung des Ankers 12 ist parallel dazu das Ventil V₃ angeschlossen, während das Ventil V₂, das wiederum als Freilaufventil dient, parallel zu den beiden Feldwicklungen 14, 16 angeschlossen ist. Die Ventile V₂, V₃, die wiederum beispielsweise als Thyristoren ausgebildet sein können, sind derart gepolt, dass ihre beiden Kathoden miteinander verbunden sind.

Wiederum sind während des Motorbetriebes die Ventile V₂, V₃ inaktiv, so dass das Bremsmodul 20 ohne Einfluss ist. Somit wird der Motor 10f während des Motorbetriebs ausschließlich über V₁ gesteuert, der über die Pulsweitenmodulationssteuerung PWM angesteuert wird. Bei Umschaltung in den Bremsbetrieb wird zunächst das Ventil V₁ ausgeschaltet. Anschließend werden zeitverzögert die Ventile V₂, V₃ eingeschaltet und V₁ für die Dauer der Bremsphase von z.B. etwa 3 Sekunden eingeschaltet, bis der Motor steht. Anschließend werden V₁, V₂ und V, ausgeschaltet, womit die Bremsphase beendet ist.

Eine weitere Abwandlung des erfindungsgemäßen Motors ist in Fig. 9 dargestellt und insgesamt mit der Ziffer 10g bezeichnet.

Hierbei wird wie bei den Ausführungen gemäß Figuren 4 bis 6 eine Phasenanschnittsteuerung zur Steuerung des Motors 10f während des Motorbetriebs verwendet.

Zur Begrenzung des Erregerstroms im Bremsbetrieb wird anstelle eines Lastwiderstandes nunmehr ein steuerbares Ventil V₅ in Form eines Feldeffekttransistors verwendet, der an seinem Gate über eine Pulsweitenmodulationssteuerung PWM angesteuert wird.

Im dargestellten Fall ist wiederum eine symmetrische Anordnung des Ankers 12 zwischen den beiden Feldwicklungen 14, 16 gezeigt. Während die eine Feldwicklung 14 mit dem einen Pol der Speisespannungsquelle 17 verbunden ist, ist die andere Feldwicklung 16 an ihrem dem Anker 12 abgewandten Ende über ein Ventil V₁ in Form eines Triacs mit dem anderen Pol der Speisespannungsquelle 17 verbunden. Der Triac wird über eine Phasenanschnittsteuerung 18 angesteuert.

Zur Überbrückung der Ankerwicklung 12 während des Bremsbetriebs ist wiederum ein steuerbares Ventil V₃ vorgesehen, während parallel zur Feldwicklung 14 ein steuerbares Freilaufventil V₂ angeschlossen ist, um Spannungsspitzen an der Feldwicklung 14 zu begrenzen. Zur Steuerung des Erregerstroms im Bremsbetrieb dient das Ventil V₅ in Form des Feldeffekttransistors, das über ein Ventil V₄ an die Feldwicklung 14 bzw. den Anker 12 und die beiden Ventile V₂, V₃ angeschlossen ist. Sofern die Pulsweitenmodulationssteuerung PWM abgeschaltet werden kann, sorgt das Ventil V₄ lediglich für die richtige Polarität am Ventil V₅. Es kann sich also im einfachsten Fall um eine Diode handeln. Sofern die Pulsweitenmodulationssteuerung nicht abschaltbar ist, ist das Ventil V₄ ein steuerbares Ventil, wie auch die beiden Ventile V₂, V₃, zum Beispiel ein Thyristor. Um eine Potentialtrennung zu gewährleisten, kann wiederum zur Ansteuerung für die Ventile V₂, V₃ und gegebenenfalls V₄ ein Optokoppler verwendet werden.

Wie aus Fig. 9 zu ersehen ist, sind die Ventile V₂, V₃, V₄ sämtlich mit ihrer Anodenseite zwischen Feldwicklung 14 und Anker 12 angeschlossen.

In der Motorbetriebsphase sind die Ventile V₂, V₃, V₄, V₅ abgeschaltet, so dass sich die bekannte Schaltung eines Reihenschlussmotors ergibt, der über einen Triac V₁ mit Phasenanschnittsteuerung 18 gesteuert wird. Zur Umschaltung in den Bremsbetrieb wird zunächst V₁ über die Phasenanschnittsteuerung 18 ausgeschaltet und mit einer gewissen Zeitverzögerung die Ventile V₂, V₃ eingeschaltet. Die Ventile V₄, V₅ werden dann für die Dauer der Bremsphase eingeschaltet, bis der Motor zum Stillstand gekommen ist. Anschließend werden die Ventile V₄, V₅ und V₂, V₃ ausgeschaltet, womit die Bremsphase beendet ist.

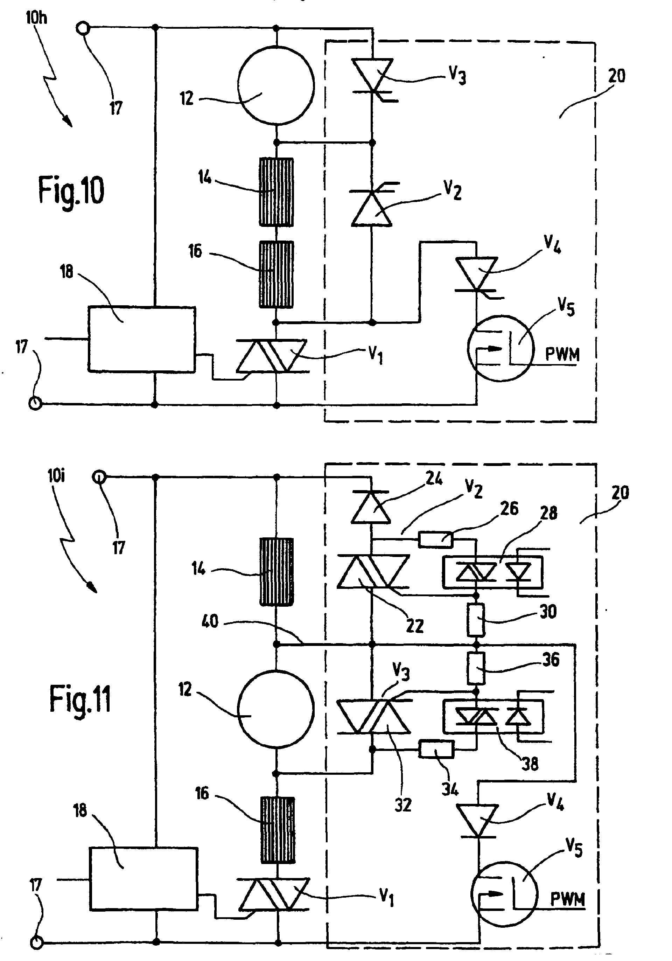

In Fig. 10 ist eine Abwandlung des Reihenschlussmotors gemäß Fig. 9 mit asymmetrischer Anordnung des Ankers 12 dargestellt und insgesamt mit 10h bezeichnet. Abgesehen von der asymmetrischen Anordnung entsprechen Aufbau und Funktionsweise des Motors 10h vollständig der zuvor anhand von Fig. 9 beschriebenen Ausführung. Der Anker 12 ist mit einem Pol der Speisespannungsquelle 17 verbunden und mit einem anderen Pol an die beiden in Reihe geschalteten Feldwicklungen 14, 16 angeschlossen. Das dem Anker 12 abgewandte Ende der Feldwicklung 16 ist über das Ventil V₁ in Form des Triacs mit dem anderen Pol der Speisespannungsquelle 17 verbunden. Zur Ansteuerung dient wiederum eine Phasenanschnittsteuerung 18. Zur Überbrückung des Ankers 12 ist parallel dazu ein steuerbares Ventil V₃ beispielsweise in Form eines Thyristors angeschlossen. Parallel zu den beiden Feldwicklungen 14, 16 ist das Freilaufventil V₂ mit seiner Kathode an die Kathode des Ventils V₃ und den Anker 12 bzw. die Feldwicklung 14 angeschlossen. Zur Steuerung des Erregerstroms im Bremsbetrieb, der über die Feldwicklungen 14, 16 und über das Ventil V₃ fließt, ist wiederum das Ventil V₅ in Form eines Feldeffekttransistors vorgesehen, der über eine Pulsweitenmodulationssteuerung PWM angesteuert wird und über ein Ventil V₄ zwischen Triac und Feldwicklung 16 angeschlossen ist. Wie zuvor bereits beschrieben, kann V₄ eine einfache Diode sein, sofern die Pulsweitenmodulationssteuerung PWM abschaltbar ist.

In Fig. 11 ist eine mögliche Realisationsform des Motors gemäß Fig. 9 mit größerem Detail dargestellt und insgesamt mit 10i bezeichnet.

Die Grundschaltung des Motors 10i stimmt vollständig mit der Schaltung des Motors 10g gemäß Fig. 9 überein. Lediglich die Ventile V₂, V₃ und V₄, die ja bei der Schaltung gemäß Fig. 9 lediglich beispielhaft angedeutet wurden, sind nunmehr in ihrer konkreten Ausgestaltung dargestellt.

V₄ ist als einfache Diode ausgebildet, da V₅ über die Pulsweitenmodulationssteuerung PWM abschaltbar ist. Die beiden Ventile V₂, V₃ sind jeweils als Triac ausgebildet, die über einen Optotriac angesteuert werden.

Das Ventil V₂ (Freilauf) weist einen Triac 22 auf, der zwischen Anker 12 und Feldwicklung 14 über eine Diode 24 angeschlossen ist, die mit ihrer Kathode an der Speisespannungsquelle 17 liegt. Zur Ansteuerung des Triacs 22 dient ein Optotriac 28, der einerseits an das Gate des Triacs 22 angeschlossen ist und andererseits über einen Widerstand 26 an die Verbindung mit der Anode der Diode 24 angeschlossen ist. Der Optotriac 28 ist über einen Widerstand 30 mit der Leitung 40 verbunden, die an die Anode des Ventils V₄, den Anker 12 und die Feldwicklung 14 angeschlossen ist. Der Optotriac 28 wird über eine LED angesteuert.

In entsprechender Weise weist das Ventil V₃ zur Überbrückung des Ankers 12 einen Triac 32 auf, der parallel zum Anker 12 zwischen der Leitung 40 und der Verbindung zur Feldwicklung 16 angeschlossen ist. Auf eine Diode in diesem Kreis kann verzichtet werden. Der Triac 32 wird wiederum über einen Optotriac 38 angesteuert, der mit dem Gate des Triacs 32 verbunden ist, über einen Widerstand 36 mit der Leitung 40 gekoppelt ist und über einen Widerstand 34 mit dem Anschluss des Triacs 32 an Anker 12 und Feldwicklung 16 angeschlossen ist. Zur Ansteuerung des Optotriacs dient wiederum eine LED.

Grundsätzlich könnten auch die Triacs 22, 32 unmittelbar als Optotriacs ausgebildet sein, sofern Bauelemente mit ausreichender Leistung ohne weiteres zur Verfügung stehen. Im vorliegenden Fall sind jedoch die Triacs 22, 32 als Leistungstriac ausgebildet, während die Optotriacs 28, 38 lediglich als Steuerelemente mit geringer Leistung ausgeführt sind.

Die Funktionsweise des Motors 10i gemäß Fig. 11 entspricht vollständig der Funktionsweise des Motors 10g gemäß Fig. 9.

Es versteht sich, dass auch beispielsweise der Motor 10h gemäß Fig. 10 in entsprechender Weise mit Triacs bzw. Optotriacs ausgeführt werden könnte, wie anhand von Fig. 11 erläutert wurde.

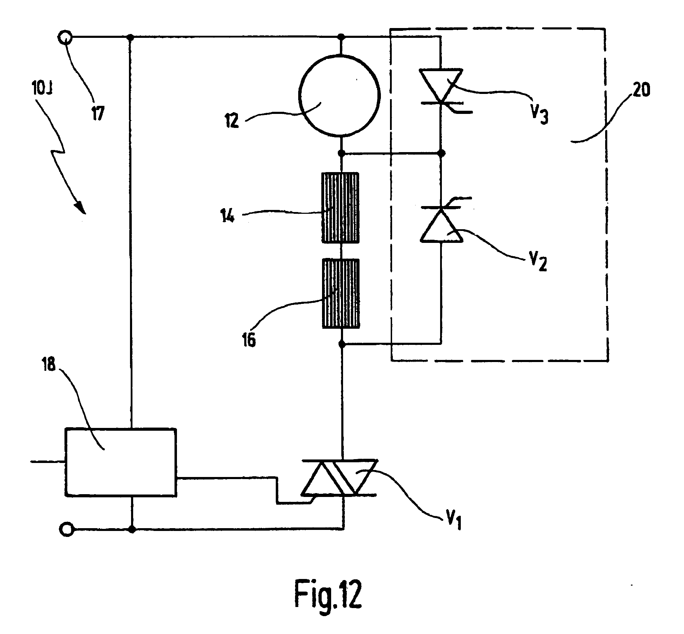

Eine Abwandlung der Ausführungsform gemäß Fig. 8 ist in Fig. 12 dargestellt und insgesamt mit 10j bezeichnet.

Hierbei wurde die Pulsweitenmodulationssteuerung gemäß Fig. 8 durch eine Phasenanschnittsteuerung 18 ersetzt. Diese steuert das nunmehr als Triac ausgebildete Ventil V₁ sowohl im Motorbetrieb als auch im Bremsbetrieb. Der Gleichrichter 21 entfällt hierbei naturgemäß. Im übrigen entspricht die Funktionsweise dieser Schaltung vollständig der zuvor anhand von Fig. 8 erläuterten Funktionsweise.

Im Motorbetrieb wird der Triac V1 typischerweise mit beiden Halbwellen angesteuert. Dabei liegt der Phasenanschnittwinkel α zwischen 90° und 180°. Dagegen wird im Bremsbetrieb nur die positive Halbwelle durchgelassen, z.B. mit α von 160°.

Die Ausführung gemäß Fig. 12 weist gegenüber Fig. 8 weniger Bauteil auf, ist raumsparend und besitzt geringere Verluste.

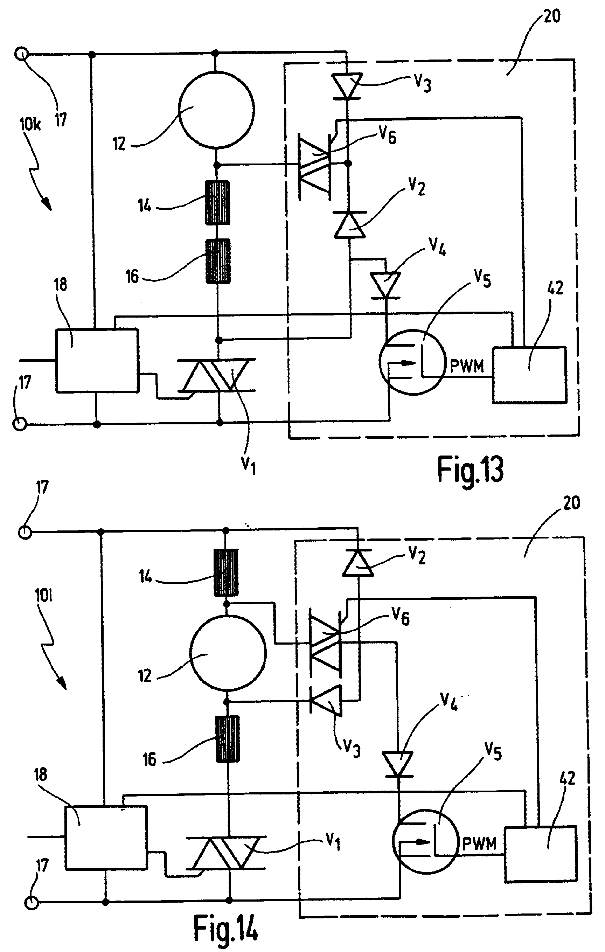

In Fig. 13 ist eine Abwandlung der Ausführung des Motors gemäß Fig. 10 dargestellt und insgesamt mit 10k bezeichnet.

Hierbei wurde die Schaltung gegenüber der Ausführung gemäß Fig. 10 dadurch vereinfacht, dass in die Verbindungsleitung zwischen Anker 12 bzw. Feldwicklung 14 und den Dioden V₂, V₃ ein Ventil V₆ in Form eines Trias eingefügt wurde, der über die Steuerung 42 des Ventils V₅ (PWM) angesteuert wird. Die Ventile V₂, V₃ können in diesem Fall als einfache Dioden ausgeführt sein. Im Übrigen entspricht die Funktionsweise der Schaltung vollständig derjenigen gemäß Fig. 10.

In Fig. 14 ist eine Abwandlung der asymmetrischen Schaltung gemäß Fig. 13 als symmetrische Schaltung dargestellt und insgesamt mit 101 bezeichnet. Im Übrigen entspricht die Funktionsweise vollständig der Ausführung gemäß Fig. 11 bzw. Fig. 13.

Es versteht sich, das die in den Figuren 13 und 14 getrennt dargestellte Steuerung 42 für den PWM mit der Steuerung 18 für V₁ kombiniert sein kann und etwa als Microcontroller ausgeführt sein kann.

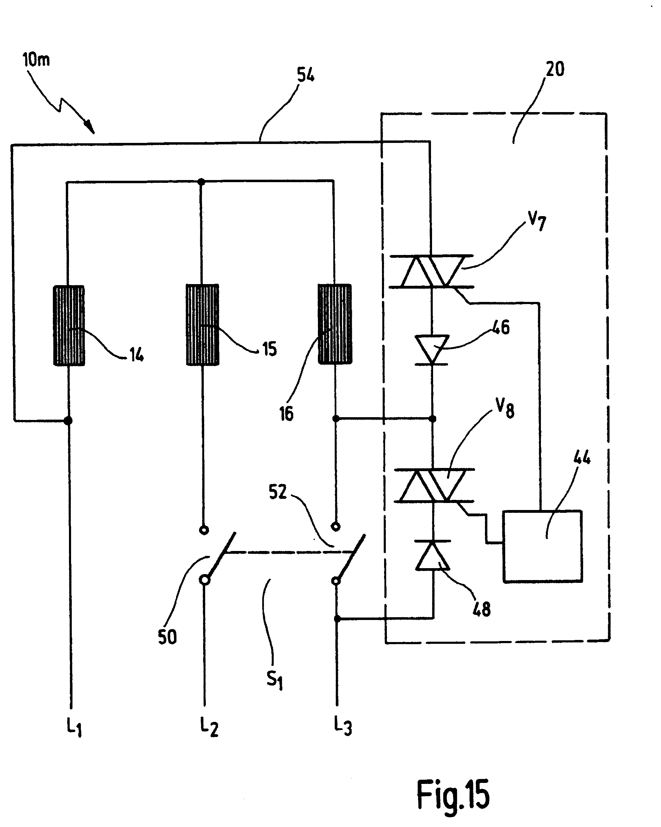

In Fig. 15 ist eine Ausführung eines erfindungsgemäßen Elektromotors in Form eines Asynchronmotors dargestellt und insgesamt mit 10m bezeichnet. Der Motor 10m ist als 3-phasiger Motor mit drei Feldwicklungen 14, 15, 16 ausgebildet, die in Sternschaltung angeordnet sind und von den Phasen L₁, L₂ und L₃ der Versorgungsspannung mit einer Frequenz von z.B. 300 Hz gespeist werden. Der Anker ist als Kurzschlussläufer ausgebildet und hier nicht dargestellt.

Wegen der gegenüber der Netzfrequenz von 50 Hz erhöhten Frequenz wird ein solcher Motor bei Elektrowerkzeugen auch als eine HF-Maschine bezeichnet (nicht zu verwechseln mit Hochfrequenz im Sinne von elektromagnetischen Wellen im MHz-Bereich oder höher). Derartige HF-Maschinen werden für Elektrowerkzeuge bei besonders starken Beanspruchungen im Dauerbetrieb eingesetzt, da sie infolge des Fehlens von Bürsten wartungsfrei sind.

Zum Ein- und Ausschalten des Motors 10m und zum Umschalten zwischen Motorbetrieb und Bremsbetrieb dient ein zweipoliger Ein-/Aus-Schalter S₁ mit den beiden Polen 50 und 52. Zum Bremsen des Motors 10m dient die insgesamt mit 20 bezeichnete Bremsschaltung. Die Bremsschaltung 20 weist ein Ventil V₈ auf, das mit einer Diode 48 in Reihe liegt und über das die beiden Feldwicklungen 14, 16 bei geschlossenem Ventil V₈ in Reihe zwischen die Phasen L₁ und L₃ geschaltet werden und so aus dem Netz mit einer pulsierenden Gleichspannung fremderregt werden.

Gleichzeitig wird im Bremsbetrieb parallel zu den beiden Feldwicklungen 14, 16 über eine Leitung 54 ein als Freilaufventil wirkendes Ventil V₇ geschlossen, das mit einer Diode 46 in Reihe liegt. Durch das Freilaufventil V₇ wird ein Weiterlaufen des Motors 10m im Bremsbetrieb vermieden. Die beiden Ventile V₇, V₈ können wie dargestellt beispielsweise als Triacs ausgeführt sein, die über eine Steuerung 44 angesteuert werden.

Im Motorbetrieb sind beide Ventile V₇, V₈ geöffnet und der Schalter S₁ geschlossen, so dass die bekannte Schaltung einer 3-phasigen Asynchronmotor in Sternschaltung vorliegt. Zur Umschaltung in den Bremsbetrieb wird der Schalter S₁ geöffnet und die Ventile V₇, V₈ werden geschlossen. Während das Ventil V₇ voll aufgesteuert wird, also mit einem Stromlaufwinkel von 180° betrieben wird, kann der Stromlaufwinkel des Ventils V₈ vorzugsweise mittels der Steuerung 44 auf einen gewünschten Wert zwischen 0° und 180° reguliert werden, um eine Steuerung der Bremsung zu ermöglichen.

Es versteht sich, dass die Ventile V₇, V₈ wahlweise auch als beliebige auf andere Weise steuerbare Ventile ausgeführt sein können, beispielsweise als Transistoren, insbesondere als Feldeffekttransistoren ausgebildet sein könnten.

## Patentansprüche

1. Gebremster Elektromotor mit mindestens einer Feldwicklung (14, 16) und mindestens einem kommutierenden Anker (12), der mit der mindestens einen Feldwicklung (14, 16) in Reihe liegt und im Motorbetrieb aus einer Versorgungsspannung (17) gespeist wird, mit Mitteln (S₁, S₂, S₃, V₁, V₂, V₃, V₄, V₅) zum Umschalten in den Bremsbetrieb, **dadurch gekennzeichnet, dass** die Mittel zum Umschalten in den Bremsbetrieb eine Überbrückung des Ankers (12) und eine Fremderregung mindestens einer Feldwicklung (14, 16) durch die Versorgungsspannung (17) im Bremsbetrieb erlauben.

2. Elektromotor nach Anspruch 1, **dadurch gekennzeichnet, dass** Mittel (S₃, V₁, V₄, V₅, R₁, L₂) zur Begrenzung des Erregerstroms durch die mindestens eine Feldwicklung (14, 16) im Bremsbetrieb vorgesehen sind.

3. Elektromotor nach Anspruch 1 oder 2, **dadurch gekennzeichnet, dass** Mittel (S₄, V₂) zur Begrenzung der Spannung an der mindestens einen Feldwicklung (14, 16) im Bremsbetrieb vorgesehen sind.

4. Elektromotor nach einem der vorhergehenden Ansprüche, **dadurch gekennzeichnet, dass** zur Überbrückung des Ankers (12) im Bremsbetrieb ein steuerbares Ventil (V₃) vorgesehen ist, das parallel zum Anker (12) geschaltet ist.

5. Elektromotor nach einem der vorhergehenden Ansprüche, **dadurch gekennzeichnet, dass** zur Begrenzung des Erregerstromes durch die mindestens eine Feldwicklung (14, 16) ein steuerbares Ventil (V₁, V₄, V₅) vorgesehen ist.

6. Elektromotor nach Anspruch 4 oder 5, **dadurch gekennzeichnet, dass** als Ventil (V₁, V₂, V₃, V₄, V₅) ein Schalter, ein Relais, ein Halbleiter mit geeigneter Ansteuerung, wie ein Triac, ein Thyristor, ein FET, ein Transistor oder dgl. vorgesehen ist.

7. Elektromotor nach Anspruch 5 oder 6, **dadurch gekennzeichnet, dass** das steuerbare Ventil (V₄) die mindestens eine Feldwicklung (14) im Bremsbetrieb über einen Lastwiderstand (R₁) mit der Speisespannung verbindet.

8. Elektromotor nach Anspruch 5 oder 6, **dadurch gekennzeichnet, dass** das steuerbare Ventil (V₄) die mindestens eine Feldwicklung (14) über einen Lastwiderstand (R₁) und mindestens eine Erregerwicklung (L₂) mit der Speisespannung verbindet.

9. Elektromotor nach einem der vorhergehenden Ansprüche, **dadurch gekennzeichnet, dass** zur Überbrückung des Ankers (12) ein steuerbares Ventil (V₃) vorgesehen ist, das in Reihe mit einer Erregerwicklung (L₁) parallel zum Anker (12) angeschlossen ist.

10. Elektromotor nach einem der vorhergehenden Ansprüche, **dadurch gekennzeichnet, dass** zur Steuerung des Motors (10b, 10c, 10d, 10g, 10h, 10i) im Motorbetrieb eine Phasenanschnittsteuerung (18) vorgesehen ist, über die ein Schalter (V₁) vorzugsweise in Form eines Triacs gesteuert wird, der in Reihe mit der mindestens einen Feldwicklung (14, 16) und dem Anker (12) liegt.

11. Elektromotor nach einem der Ansprüche 1 bis 9, **dadurch gekennzeichnet, dass** zur Steuerung des Motors im Motorbetrieb ein Transistor (V₁), vorzugsweise ein Feldeffekttransistor vorgesehen ist, der vorzugsweise von einer Pulsweitenmodulationssteuerung (PWM) gesteuert wird, und der mit der mindestens einen Feldwicklung (14, 16) und dem Anker in Reihe liegt.

12. Elektromotor nach einem der vorhergehenden Ansprüche, **dadurch gekennzeichnet, dass** ein Ventil (V₂) vorgesehen ist, das parallel zu der mindestens einen Feldwicklung (14, 16) angeschlossen ist, die zur fremderregten Bremsung im Bremsbetrieb verwendet wird.

13. Elektromotor nach Anspruch 11 oder 12, **dadurch gekennzeichnet, dass** als Speisespannung eine Wechselspannung vorgesehen ist und dass der Transistor (V₁), vorzugsweise der Feldeffekttransistor, über einen Gleichrichter (21) an die Speisespannung (17) und an die mindestens eine Feldwicklung (14, 16) angeschlossen ist.

14. Elektromotor nach einem der vorhergehenden Ansprüche, **dadurch gekennzeichnet, dass** zur Steuerung des Erregerstroms im Bremsbetrieb durch die mindestens eine Feldwicklung (14) ein Transistor (V₁, V₅), vorzugsweise ein Feldeffekttransistor vorgesehen ist, der vorzugsweise über eine Pulsweitenmodulationssteuerung (PWM) angesteuert wird.

15. Elektromotor nach Anspruch 14, **dadurch gekennzeichnet, dass** der von einer Pulsweitenmodulationssteuerung (PWM) angesteuerte Transistor (V₅) über ein Ventil (V₄) an den Anker (12) bzw. die mindestens eine Feldwicklung (14, 16) angeschlossen ist.

16. Elektromotor nach einem der Ansprüche 1 bis 6 oder 12, **dadurch gekennzeichnet, dass** zur Steuerung des Motors (10j) im Motorbetrieb und im Bremsbetrieb eine Phasenanschnittsteuerung (18) vorgesehen ist, über die ein Schalter (V₁) vorzugsweise in Form eines Triacs gesteuert wird, der in Reihe mit der mindestens einen Feldwicklung (14, 16) und dem Anker (12) liegt, wobei die Phasenanschnittsteuerung (18) im Bremsbetrieb nur eine Halbwelle entsprechend der zur Bremsen notwendigen Stromrichtung ansteuert.

17. Elektromotor nach einem der vorhergehenden Ansprüche, **dadurch gekennzeichnet, dass** zur Ansteuerung eines steuerbaren Ventils (V₂, V₃, V₄) ein Optokoppler, insbesondere mit einer Optodiode oder einem Optotriac (28, 38) vorgesehen ist.

18. Gebremster Elektromotor in Form eines Asynchronmotors mit mindestens zwei, vorzugsweise drei, Feldwicklungen (14, 15, 16), vorzugsweise in Sternschaltung, und mit einem Kurzschlussläufer, mit Mitteln (S₁) zum Umschalten in den Bremsbetrieb, **dadurch gekennzeichnet, dass** die Mittel (S₁) zum Umschalten in den Bremsbetrieb eine zumindest zweipolige Trennung der Feldwicklungen (14, 15, 16) von der Versorgungsspannung (L₁, L₂, L₃) erlauben, dass zwischen mindestens zwei Feldwicklungen (14, 15, 16) ein steuerbares Ventil (V₇, 46) vorgesehen ist, das im Bremsbetrieb als Freilaufventil wirkt und im Motorbetrieb geöffnet ist, und dass mindestens eine, vorzugsweise zwei Feldwicklungen (14, 16) im Bremsbetrieb über ein steuerbares Ventil (V₈, 48) von der Versorgungsspannung (L₁, L₃) fremderregt wird, das im Motorbetrieb geöffnet ist.

19. Elektromotor nach Anspruch 18, **dadurch gekennzeichnet, dass** die Ventile (V₇, V₈) als Triacs ausgeführt sind, die jeweils mit einer Diode (46, 48) in Reihe liegen.

20. Elektromotor nach Anspruch 19, **dadurch gekennzeichnet, dass** das Freilaufventil (V₇) im Bremsbetrieb mit einem Stromflusswinkel von 180° betrieben wird, und dass der Stromflusswinkel des Ventils (V₈) zur Fremderregung zur Regulierung der Bremsung im Bremsbetrieb auf einen Wert von ≤180° steuerbar ist.
